# EUROPEAN PATENT SPECIFICATION

(11) **EP 2 519 348 B1**
(45) Date of publication and mention of the grant of the patent: **13.02.2019**
(21) Application number: 10798358.7
(22) Date of filing: 29.12.2010
(51) Int. Cl.: B01J 23/34, B01D 53/86, B01J 35/00, B01J 21/06, B01J 37/03

(54) **METHOD OF PRODUCTION OF PHOTOCATALYTIC POWDER COMPRISING TITANIUM DIOXIDE AND MANGANESE DIOXIDE ACTIVE UNDER ULTRAVIOLET AND VISIBLE LIGHT**
VERFAHREN ZUR HERSTELLUNG VON FOTOKATALYTISCHEM PULVER MIT TITANOXID UND MANGANOXID MIT AKTIVITÄT UNTER ULTRAVIOLETTEM UND SICHTBAREM LICHT
PROCÉDÉ DE PRODUCTION DE POUDRE PHOTOCATALYTIQUE COMPRENANT DU DIOXYDE DE TITANE ET DU DIOXYDE DE MANGANÈSE ACTIVE SOUS DE LA LUMIÈRE ULTRAVIOLETTE ET VISIBLE

(30) Priority: 30.12.2009 GR 20090100724
(43) Date of publication of application: 07.11.2012
(73) Proprietor: Foundation for Research and Technology - Hellas / FORTH, 70013 Heraklion, Crete (GR)
(72) Inventor: KIRIAKIDIS, George, GR-70013 Heraklion - Crete (GR); BINAS, Vassilis, GR-70013 Heraklion - Crete (GR); TUDOSE, Valentin, GR-70013 Heraklion - Crete (GR)
(74) Representative: Samuelides, Emmanuel
(86) International application number: PCT/EP2010/070872
(87) International publication number: WO 2011/080304

(56) References cited:
- EP-A1- 1 564 185
- US-A1- 2002 147 108
- JIANG B ET AL: "Low-temperature selective catalytic reduction of NO on MnOx/TiO2 prepared by different methods", JOURNAL OF HAZARDOUS MATERIALS, ELSEVIER, AMSTERDAM, NL, vol. 162, no. 2-3, 15 March 2009 (2009-03-15), pages 1249-1254, XP025805127, ISSN: 0304-3894, DOI: 10.1016/J.JHAZMAT.2008.06.013 [retrieved on 2008-06-13]
- ZHANG L ET AL: "MnO2-doped anatase TiO2 - An excellent photocatalyst for degradation of organic contaminants in aqueous solution", CATALYSIS COMMUNICATIONS, ELSEVIER SCIENCE, AMSTERDAM, NL, vol. 10, no. 10, 20 May 2009 (2009-05-20), pages 1414-1416, XP026093827, ISSN: 1566-7367, DOI: 10.1016/J.CATCOM.2009.03.015 [retrieved on 2009-03-25]

## Description

The present invention relates to a method of production of photocatalytic material, and, a photocatalytic material to be used under Ultra Violet (UV) and visible light. The invention addresses also photocatalytic redox reactions produced by UV and visible light.

TiO₂ is considered to be one the most effective and environmentally friendly photocatalyst due to its high chemical stability, and it is extensively used for the photodegradation of various pollutants both in liquid and gas phases (see for example EP-1 504 816 and US A 2002147108).

The photocatalysis based on semiconductor materials has a simple mechanism involving a few stages. When light, with energy at least equal with the bandgap, is absorbed by a semiconductor a number of electrons equal with the number of absorbed photons undergo a transition from the valence band to the conduction band leaving holes behind. Excited electrons in the conduction band and positive holes in the valence band are mobile; they migrate towards the surface becoming available for charge transfer and are thus capable to initiate surface chemical reactions, usually by the production of highly oxidative hydroxyl and superoxide radicals. Therefore, the photocatalytic activity will be depending on the type of the applied light source, the absorption properties in the specific semiconductor, the electron-hole recombination rate as well as the oxidation and reduction rates at the surface of the material. The bandgap of pure TiO₂ based photocatalytic materials is larger than 3 eV which is energetically equivalent to photons in the UV region of the spectrum. In order to make a visible light photocatalyst doping or photosensitizing can be used.

The object of the invention is to introduce a photocatalytic material and a method to produce such a material with relatively high photocatalytic activity under UV and visible light exposure, either natural or artificial.

The photocatalyst is obtained by precipitating titanium dioxide on a sol of manganese dioxide. The method of the invention comprises the steps of providing a mixture including a) hydrated manganese dioxide sol, b) titanium solution and c) NH₃ solution, and, the processing of the above.

The photocatalyst produced with the method of the present invention includes titanium and manganese. The manganese acts both as a dopant and as a photosensitizer. The photocatalyst is active under both UV and visible light and is able to decompose organic and inorganic pollutants. For example the photocatalyst may be used for the degradation of Volatile Organic Compounds (VOCs) such as acetaldehyde (CH₃CHO), formaldehyde (CH₂O), benzene, toluene etc and volatile inorganic compounds such as NOₓ, CO₂ under both, UV and visible light. In general the photocatalyst can be used as obtained or embedded in a matrix (i.e. concrete, cement, mortar, stucco, paint etc) or immobilized on or in a solid surface/ body. The photocatalyst can be further used for air or water de-pollution.

Preferably the titanium solution used as precursor for the photocatalyst is an aqua solution of titanium oxysulfate.

The pH of the mixture of hydrated manganese dioxide sol, titanium solution and NH₃ solution may be between 6 and 8, and preferably 7.

The mixture of hydrated manganese dioxide sol, titanium solution and NH₃ solution is processed to obtain a powder including titanium dioxide and manganese dioxide. The powder thus obtained may be annealed at a temperature between 600°C to 900°C, and preferably at a temperature around 700°C. Further the powder may be filtered and washed with distilled water until Document EP 1 564 185 A1, working example 1-4 discloses the preparation of manganese doped amorphous type titanium peroxide by precipitating from a solution of MnCl₂.4H₂O and titanium tetrachloride TiCl₄. In general the document discloses titania-metal composite not having photocatalytic activity (see in particular claims and paragraph [0015]) but aims to reduce molecural bond dissociation of organic material due to sunlight (see paragraph [0010]).

Jiang et al. [Low-temperature selective catalytic reduction of NO on MnOx/TiO2 prepared by different methods, Journal of hazardous materials, Elsevier, Amsterdam, NL, vol. 162, no. 2-3, 15 March 2009 (2009-03-15), pages 1249-1254*]* refers to catalysts for low temperature catalytic reduction. The document discloses three methods of preparation of MnOₓ/TiO₂ catalyst: (i) a sol-gel method, whereby MnOₓ/TiO₂ is prepared by mixing butyl titanate, ethanol, water, acetic acid and manganese nitrate to form a transparent yellow sol (section 2.1.1.), (ii) an impregmation method (section 2.1.2), and (iii) a co-precipitation method from a solution of manganese nitrate and titanium sulphate by the addition of ammonia water (section 2.1.3.). The catalysts produced according to the methods disclosed in Jiang at al. were tested under the flow of a gas at temperatures of 343 K to 523 K (section 2.2.).

US A 20022147108 (paragraphs [0133] & [0125]) discloses a method to produce a photocatalyst by precipitating titanium dioxide on a solution of manganese nitrate [Mn(NO₃)₂×H₂O] comprising (i) obtaining the hydrated manganese nitrate, (ii) providing a mixture including a) the hydrated manganese nitrate, b) titanium solution and c) (NH₄)₂TiF₆ solution, and (iii) processing the mixture to obtain a film of photocatalyst including Mn-doped titanium dioxide [TiO₂] on a glass substrate. Table 1 of left column on page 2 notes that the result is a composite film of Mn³⁺ doped TiO₂.

Zhang L. et al (Mn02-doped anatase Ti02 - An excellent photocatalyst for degradation of organic contaminants in aqueous solution", Catalysis Communication s, Elsevier Science, Amsterdam, NL, vol. 10, no. 10, 20 May 2009 (2009-05-20), pages 1414-1416, XP026093827, ISSN: 1566-7367, 001: 10.1016/J.CATCOM.2009.03.015A) present a photocatalyst powder composed by particles, whereby the size of the particles is between 200 nm and 1200 nm and include titanium dioxide and manganese dioxide formulations, whereby the photocatalyst has predominantly the anatase crystalline structure.

The object of the invention is to introduce a photocatalytic material and a method to produce such a material with relatively high photocatalytic activity under UV and visible light exposure, either natural or artificial.

According to the invention, a method to produce a photocatalyst by precipitating titanium dioxide on a sol of manganese dioxide comprises (i) obtaining the hydrated manganese dioxide sol, (ii) providing a mixture including a) the hydrated manganese dioxide sol, b) titanium solution and c) NH3 solution, and (iii) processing the mixture to obtain powder including manganese dioxide and titanium dioxide.

A photocatalyst powder according to the invention is composed by particles, whereby the size of the particles is between 1 nm to 100 nm and includes titanium dioxide and manganese dioxide formulations, whereby the photocatalyst has predominantly the anatase crystalline structure.

The photocatalyst produced with the method of the present invention includes titanium and manganese. The manganese acts both as a dopant and as a photosensitizer. The photocatalyst is active under both UV and visible light and is able to decompose organic and inorganic pollutants. For example the photocatalyst may be used for the degradation of Volatile Organic Compounds (VOCs) such as acetaldehyde (CH₃CHO), formaldehyde (CH₂O), benzene, toluene etc and volatile inorganic compounds such as NOₓ, CO₂ under both, UV and visible light. In general the photocatalyst can be used as obtained or embedded in a matrix (i.e. concrete, cement, mortar, stucco, paint etc) or immobilized on or in a solid surface/ body. The photocatalyst can be further used for air or water de-pollution.

Preferably the titanium solution used as precursor for the photocatalyst is an aqua solution of titanium oxysulfate.

The pH of the mixture of hydrated manganese dioxide sol, titanium solution and NH₃ solution may be between 6 and 8, and preferably 7.

The mixture of hydrated manganese dioxide sol, titanium solution and NH₃ solution is processed to obtain a powder including titanium dioxide and manganese dioxide. The powder thus obtained may be annealed at a temperature between 600°C to 900°C, and preferably at a temperature around 700°C. Further the powder may be filtered and washed with distilled water until is free of sulfate and ammonium ions, yielding a brownish - grey powder. Before the annealing, the powder may be processed by grinding or milling to refine its particles.

An embodiment of the method includes the following steps: provide a colloidal solution containing hydrated manganese dioxide sol and titanium solution; stir the colloidal solution; add NH₃ solution to obtain a gel; mature the gel by stirring; separate the gel using a centrifuge or by filtering to obtain powder; wash the powder; dry the gel to obtain a dried product; grind or mill the dried product until is broken into a fine powder; and anneal the fine powder.

The size of the particles of the photocatalyst may be around 20 nm. The atomic ratio of Mn:Ti varies between 0.01:100 and 33:100, preferably less or equal than 1:100.

The photocatalytic material according to the invention has a particular structure. The material is comprised of titanium dioxide and manganese dioxide and is obtained by a method involving the precipitation of titanium oxide on a sol of manganese dioxide. This photocatalytic material is suitable for air and water de-pollution and all other applications of photocatalysts in powder form.

An embodiment of the invention is described with reference to figures 1 to 6, whereby:
figure 1 illustrates the method of manufacturing steps for a photocatalytic material according to the invention,
figure 2 shows the NO oxidation to NO₂ in the presence of photocatalyst under visible light exposure;
figure 3 shows the degradation of methylene blue in aqueous solution in the presence of photocatalyst under visible light exposure;
figure 4 shows a Transmission Electron Microscope image of the 1% MnO₂ - TiO₂ with particles having a size between 1 nm and 100 nm; and
figure 5 and figure 6 show powder X-ray Diffraction (XRD) patterns of the anatase phase formation of 0.1% MnO₂ @ TiO₂ in different calcinations temperatures (Room Temperature (RT) - 800°C).

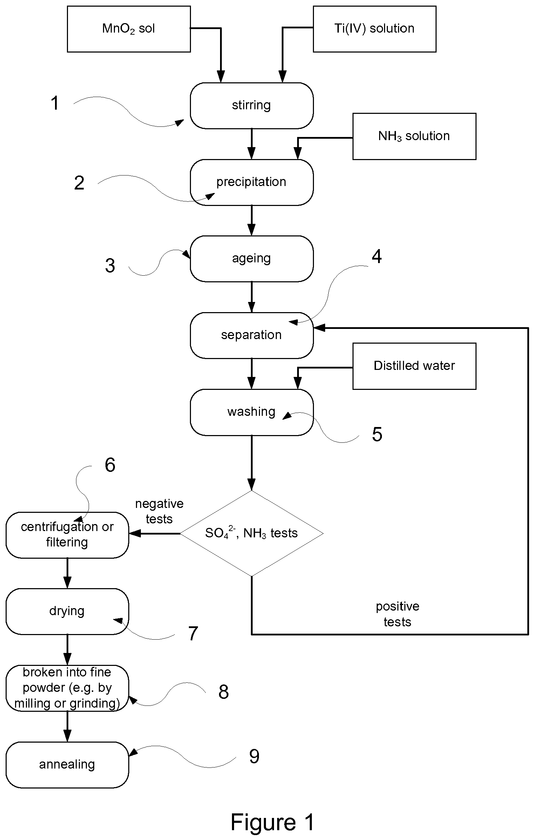

The photocatalyst material, which is a manganese dioxide - titanium dioxide composite, was prepared by a modified sol gel method. In this method the hydrated titanium dioxide gel was precipitated on a hydrated manganese dioxide sol. A photocatalyst, according to the invention, may be synthesized following the method steps described below and illustrated in Figure 1. Different precursors such as titanium (IV) tetraisopropoxide, i.e. Ti{OCH(CH₃)₂}₄, and titanium(IV) oxysulfate, i.e. TiOSO₄xH₂O, may be employed for the production of an inventive photocatalyst material. In both cases, i.e. regardless the use of either titanium (IV) tetraisopropoxide or titanium (IV) oxysulfate as precursor, the photocatalytic material can be obtained with the same physical properties, the same structure and almost the same photocatalytic activity based on the synthesis involved. However, the titanium(IV) tetraisopropoxide is expensive and the synthesis requires organic solvents which increase the price of the final product; also the synthesis is harder to scale up, in contrast with the titanium(IV) oxysulfate (TiOSO₄) precursor. The TiOSO₄ precursor yields a less pure product, but this is overcome by thoroughly washing the product with water in order to leach all the soluble impurities.

The method to produce a photocatalyst that is illustrated in figure 1 includes the following steps:
✔ provide a colloidal solution containing hydrated manganese dioxide sol and titanium solution,
✔ stir the colloidal solution (1) at room temperature for a period between 24 to 68 hours, preferably around 48 hours,
✔ add NH₃ solution to obtain a gel with pH between 6 and 8,
✔ ageing the gel by stirring (3) for a period between 24 to 68 hours, preferably around 48 hours,
✔ separate the gel using a centrifuge or by filtering to obtain powder,
✔ wash (5) the powder with distilled water until is free of sulfate and ammonium,
✔ filter or centrifuge the powder (6),
✔ dry (7) the powder to obtain fine powder,
✔ break the powder into a fine powder (8) by grinding or milling, and
✔ anneal (9) the fine powder.

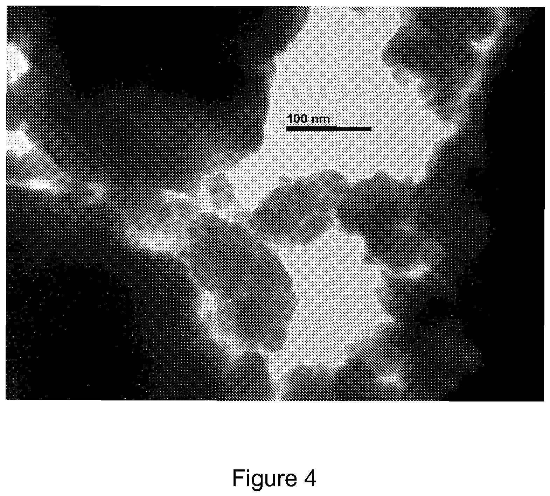

The photocatalyst obtained by precipitating titanium dioxide on a sol of manganese dioxide is shown in the flowchart of the synthesis employing TiOSO₄ given in figure 1. The hydrated manganese dioxide sol is obtained by mixing the required volumes of manganese acetate, i.e. Mn(CH₃COO)₂, 0.1M - M indicates molarity - and potassium permanganate, i.e. KMnO₄, 0.1M solutions and stirring the mixture for 12 to 36 hours at room temperature. In general, the concentration of manganese acetate and potassium permanganate may vary between 0.01 M to 4 M. The obtained sol is mixed with a solution of TiOSO₄. The quantity of TiOSO₄ is computed so the desired ratio between Mn and Ti is achieved. The quantity of water required for the preparation of the solution is computed so that the concentration of TiOSO₄ in the final solution is between 10⁻³ - 4x10⁻¹ M. The colloidal solution is stirred (1) at room temperature for a period between 24 to 68 hours, preferably around 48 hours, in order to obtain the adsorption equilibrium. During this phase an exchange of Mn with Ti occurs and the final sol is a mixture of both dioxides. After this the remaining Ti⁺⁴ ions are forced to precipitate by adding NH₃ solution so that the final pH is 7 (2). The gel that is obtained from the precipitation (2) is ageing by stirring (3) for a period between 24 to 68 hours, preferably around 48 hours. The gel is then separated (4) using a centrifuge or alternatively it is filtered under vacuum, to obtain powder. Thereafter the powder is washed (5) with distilled water until is free of sulfate and ammonium ions. The powder is free of sulfate and ammonium ions when the test of sulfate and ammonium is negative. If the test is positive, the procedure (5) is repeated. After washing, the powder, which is free of sulfate and ammonium ions, undergoes centrifugation or filtering (6) and then it is dried (7). The dried powder is broken into a fine powder (8) by grinding or milling. In order to increase the crystallinity of the photocatalyst annealing (9) is required. For these formulations the annealing temperature is between 200°C and 900°C, preferably 700°C, for 1 to 10 hours. By this method we have made formulations with the atomic ratio Mn:Ti varying between 0.01:100 and 33:100. Scanning Electron Microscopy - SEM - and Transmission Electron Microscopy - TEM - revealed that the particle size of the photocatalyst is between 1 nm and 100 nm, with most frequent measurements being around 20 nm. Figure 4 shows the size of the particles in the case of titanium dioxide photocatalyst doped with 1% MnO₂.

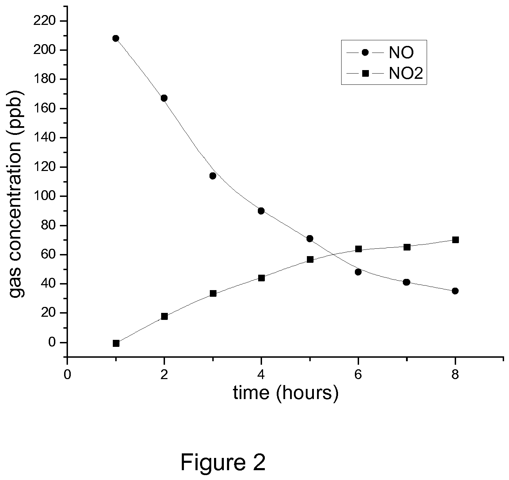

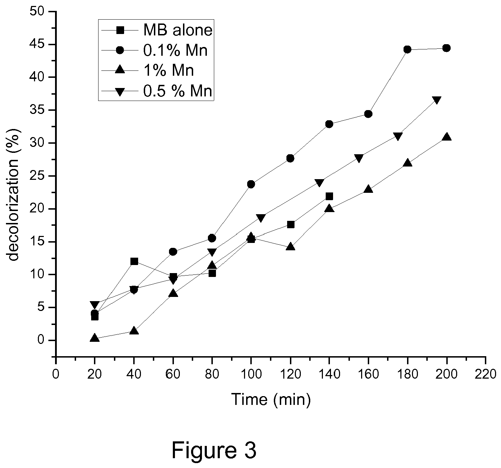

The photocatalytic activity was tasted both in liquid and gaseous phase. The photocatalyst was able to decompose methanol and acetaldehyde in gaseous phase, to accelerate the photo-oxidation of NO in gaseous phase - see figure 2, Mn:Ti 1:100 - and to reduce methylene blue (MB) dye in aqueous solution - see figure 3. In particular figure 3 illustrates the degradation of methylene blue in photocatalytic materials with different doped concentrations of Manganese dioxide. The photocatalyst doped with 0.1 % MnO₂ showed higher photocatalytic activity in the degradation of MB under visible light. In that case the photocatalyst was active both under UV - not shown in figure 3 - and visible light exposure. The line indicated with MB in figure 3 shows the degradation of methylene blue without photocatalyst.

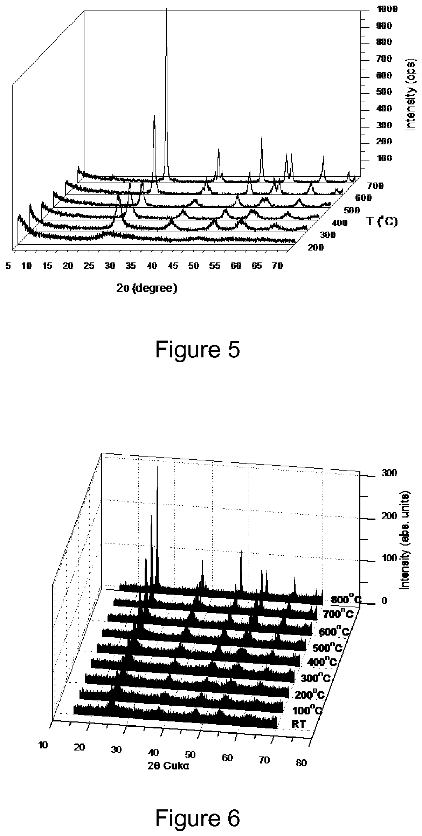

An example of the implementation of the method to obtain a photocatalytic material doped with manganese with 0.1% concentration is described below:
Typically to synthesize 0.1% MnO₂@TiO₂ we prepare a solution (thereafter solution A) of hydrated manganese dioxide sol. To make the solution A, we add to 600 ml of water, 3 ml of manganese acetate, i.e. Mn(CH₃COO)₂, having a concentration of 0.1 M and consequently 2 ml of potassium permanganate, i.e. KMnO₄, having a concentration of 0.1 M. The solution A is allowed to stir for 24h at room temperature. At the same time, 140g of the Ti-containing precursor of titanium (IV) oxysulfate hydrate, i.e. TiOSO₄xH₂O, is dissolved in 1.2 Lt of water under stirring for 2h. Then, a 200ml of ammonium hydroxide solution (25% NH₃) is added followed by vigorous stirred for 24h to prepare titanium dioxide sol - thereafter solution B. In order to obtain the adsorption equilibrium solution A is added to solution B under vigorous stirring for 48 hours. The mixture is filtered and washed with distilled water until free of sulfate and ammonium ions, yielding a brownish - grey powder. The white precipitate is dried at 100° C for 4h and allowed for calcination at 700° C for 2 h (heating rate = 15° C/min). The synthetic steps are shown in figure 1. The powder was annealed at various temperatures and characterised using X-ray diffraction - see figure 5 and figure 6. The figures show powder X-ray Diffraction (XRD) patterns in different calcinations temperatures of 0.1% MnO₂ @ TiO₂. The sample in the range of calcination temperatures has predominantly the anatase phase. The crystallinity of the photocatalytic material can be correlated with the bulk defects. The bulk defects are the sites where electron-hole recombination occurs. Fewer lattice defects induce a decrease in the electron-hole recombination rate increasing the photocatalytic activity. For TiO₂ the lattice type is important because different crystalline phases have different photocatalytic activities, the anatase phase being the most active. Both scanning and transmission electron microscopy (SEM and TEM) confirm that the material is comprised of small irregular grains agglomerated together. The particles can be easily de-agglomerated by appropriate grinding. All the annealed powders have shown the same composition after annealing and the same granular structure.

## Claims

1. A method to produce a photocatalyst by precipitating titanium dioxide on a sol of manganese dioxide comprising (i) obtaining the hydrated manganese dioxide sol, (ii) providing a mixture including a) the hydrated manganese dioxide sol, b) titanium solution and c) NH₃ solution, and (iii) processing the mixture to obtain powder including manganese dioxide and titanium dioxide.

2. A method according to claim 1, whereby the titanium solution is an aqua solution of either titanium oxysulfate or titanium tetraisopropoxide.

3. A method according to claim 1 or 2, whereby the pH of the mixture is between 6 and 8.

4. A method according to any one of claims 1 to 3, whereby the pH of the mixture is around 7.

5. A method according to any one of claims 1 to 4, whereby the mixture is processed to obtain a powder including titanium dioxide and manganese dioxide and the powder is filtered and washed with distilled water.

6. A method according to any one of claims 1 to 5, whereby the mixture is processed to obtain a powder including titanium dioxide and manganese dioxide and the powder is annealed at a temperature between 600°C to 900°C.

7. A method according to any one of claims 1 to 6, whereby the mixture is processed to obtain a powder including titanium dioxide and manganese dioxide and the powder is annealed at a temperature around 700°C.

8. A method according to any one of claims 1 to 7, whereby the mixture is processed to obtain a powder and the powder is processed by milling or grinding.

9. A method according to any one of claims 1 to 8, the method including the following steps:
a) providing a colloidal solution containing hydrated manganese dioxide sol and titanium solution;
b) stirring the colloidal solution (1);
c) adding NH₃ solution to obtain a gel;
d) maturing the gel by stirring (3);
e) separating the gel using a centrifuge or by filtering to obtain powder;
f) washing (5) the powder;
g) centrifuging or filter the powder (6);
h) drying (7) the gel to obtain a dried product;
i) breaking the dried product (8) until is broken into a fine powder by grinding or milling;
j) annealing (9) the fine powder.

10. A method according to any one of claims 1 to 9, whereby the precursor of the hydrated manganese dioxide sol is a mixture of manganese acetate and potassium permanganate.

11. Photocatalyst powder produced by the method according to any one of claims 1 to 10 composed by particles, whereby the size of the particles is between 1 nm to 100 nm and including titanium dioxide and manganese dioxide formulations, whereby the photocatalyst has predominantly the anatase crystalline structure.

12. Photocatalyst according to claim 11, whereby the size of the particles is around 20 nm.

13. Photocatalyst according to claim 11 or 12, whereby the atomic ratio Mn:Ti varies between 0.01:100 and 33:100, preferably less or equal than 1:100.

14. Photocatalyst according to any one of claims 11 to 13 embedded in a matrix or immobilized on a solid surface or in a solid body.

## Patentansprüche

1. Verfahren zur Herstellung eines Photokatalysators durch Präzipitieren von Titandioxid auf ein Mangandioxidsol, umfassend (i) Erhalten des hydratisierten Mangandioxidsols, (ii) Bereitstellen eines Gemisches, aufweisend a) das hydratisierte Mangandioxidsol, b) Titanlösung und c) NH₃-Lösung, und (iii) Verarbeiten des Gemisches, um ein Mangandioxid und Titandioxid aufweisendes Pulver zu erhalten.

2. Verfahren nach Anspruch 1, wobei die Titanlösung eine wässrige Lösung von entweder Titanoxysulfat oder Titantetraisopropoxid ist.

3. Verfahren nach Anspruch 1 oder 2, wobei der pH des Gemisches zwischen 6 und 8 beträgt.

4. Verfahren nach einem der Ansprüche 1 bis 3, wobei der pH des Gemisches etwa 7 beträgt.

5. Verfahren nach einem der Ansprüche 1 bis 4, wobei das Gemisch verarbeitet wird, um ein Pulver zu erhalten, das Titandioxid und Mangandioxid aufweist, und das Pulver filtriert und mit destilliertem Wasser gewaschen wird.

6. Verfahren nach einem der Ansprüche 1 bis 5, wobei das Gemisch verarbeitet wird, um ein Pulver zu erhalten, das Titandioxid und Mangandioxid aufweist, und das Pulver bei einer einer Temperatur zwischen 600°C bis 900°C geglüht wird.

7. Verfahren nach einem der Ansprüche 1 bis 6, wobei das Gemisch verarbeitet wird, um ein Pulver zu erhalten, das Titandioxid und Mangandioxid enthält, und das Pulver bei einer Temperatur von etwa 700°C geglüht wird.

8. Verfahren nach einem der Ansprüche 1 bis 7, wobei das Gemisch verarbeitet wird, um ein Pulver zu erhalten, und das Pulver durch Zerkleinern oder Vermahlen verarbeitet wird.

9. Verfahren nach einem der Ansprüche 1 bis 8, wobei das Verfahren folgende Schritte aufweist:
a) Bereitstellen einer kolloidalen Lösung, die hydratisiertes Mangandioxidsol und Titanlösung enthält;
b) Rühren der kolloidalen Lösung (1);
c) Zugeben von NH₃-Lösung, um ein Gel zu erhalten;
d) Reifen des Gels durch Rühren (3);
e) Abtrennen des Gels unter Verwendung einer Zentrifuge oder durch Filtrieren, um ein Pulver zu erhalten;
f) Waschen (5) des Pulvers;
g) Zentrifugieren oder Filtern des Pulvers (6);
h) Trocknen (7) des Gels, um ein getrocknetes Produkt zu erhalten;
i) Aufbrechen des getrockneten Produkts (8), bis es zu einem feinen Pulver aufgebrochen ist, durch Zerkleinern oder Vermahlen;
j) Glühen (9) des feinen Pulvers.

10. Verfahren nach einem der Ansprüche 1 bis 9, wobei der Vorläufer des hydratisierten Mangandioxidsols ein Gemisch aus Manganacetat und Kaliumpermanganat ist.

11. Photokatalysatorpulver, hergestellt nach dem Verfahren nach einem der Ansprüche 1 bis 10, zusammengesetzt aus Teilchen, wobei die Größe der Teilchen zwischen 1 nm bis 100 nm beträgt, und Titandioxid- und Mangandioxidformulierungen aufweisend, wobei der Photokatalysator überwiegend die Anatas-Kristallstruktur hat.

12. Photokatalysator nach Anspruch 11, wobei die Größe der Teilchen etwa 20 nm beträgt.

13. Photokatalysator nach Anspruch 11 oder 12, wobei das Atomverhältnis Mn:Ti zwischen 0,01:100 und 33:100 variert, vorzugsweise weniger als oder gleich 1:100 beträgt.

14. Photokatalysator nach einem der Ansprüche 11 bis 13, eingebettet in eine Matrix oder immobilisiert auf einer festen Oberfläche oder in einem festen Körper.

## Revendications

1. Procédé pour produire un photocatalyseur par précipitation de dioxyde de titane sur un sol de dioxyde de manganèse comprenant (i) obtenir le sol de dioxyde de manganèse hydraté, (ii) se procurer un mélange incluant a) le sol de dioxyde de manganèse hydraté, b) une solution de titane et c) une solution de NH₃, et (iii) traiter le mélange pour obtenir une poudre incluant du dioxyde de manganèse et du dioxyde de titane.

2. Procédé selon la revendication 1, dans lequel la solution de titane est une solution aqueuse soit d'oxysulfate de titane soit de tétraisopropoxyde de titane.

3. Procédé selon la revendication 1 ou 2, dans lequel le pH du mélange est compris entre 6 et 8.

4. Procédé selon l'une quelconque des revendications 1 à 3, dans lequel le pH du mélange est d'environ 7.

5. Procédé selon l'une quelconque des revendications 1 à 4, dans lequel le mélange est traité pour obtenir une poudre incluant du dioxyde de titane et du dioxyde de manganèse et la poudre est filtrée et lavée avec de l'eau distillée.

6. Procédé selon l'une quelconque des revendications 1 à 5, dans lequel le mélange est traité pour obtenir une poudre incluant du dioxyde de titane et du dioxyde de manganèse et la poudre est recuite à une température comprise entre 600 °C et 900 °C.

7. Procédé selon l'une quelconque des revendications 1 à 6, dans lequel le mélange est traité pour obtenir une poudre incluant du dioxyde de titane et du dioxyde de manganèse et la poudre est recuite à une température d'environ 700 °C.

8. Procédé selon l'une quelconque des revendications 1 à 7, dans lequel le mélange est traité pour obtenir une poudre et la poudre est traitée par broyage ou meulage.

9. Procédé selon l'une quelconque des revendications 1 à 8, le procédé incluant les étapes suivantes :
a) se procurer une solution colloïdale contenant un sol de dioxyde de manganèse hydraté et une solution de titane ;
b) agiter la solution colloïdale (1) ;
c) ajouter une solution de NH₃ pour obtenir un gel ;
d) faire subir une maturation au gel par agitation (3) ;
e) séparer le gel à l'aide d'une centrifugeuse ou par filtration pour obtenir une poudre ;
f) laver (5) la poudre ;
g) centrifuger ou filtrer la poudre (6) ;
h) sécher (7) le gel pour obtenir un produit séché ;
i) casser le produit séché (8) jusqu'à ce qu'il soit cassé en une poudre fine par meulage ou broyage ;
j) recuire (9) la poudre fine.

10. Procédé selon l'une quelconque des revendications 1 à 9, dans lequel le précurseur du sol de dioxyde de manganèse hydraté est un mélange d'acétate de manganèse et de permanganate de potassium.

11. Poudre de photocatalyseur produite par le procédé selon l'une quelconque des revendications 1 à 10 composée par des particules, dans laquelle la taille des particules est comprise entre 1 nm et 100 nm et incluant des formulations de dioxyde de titane et de dioxyde de manganèse, dans laquelle le photocatalyseur a principalement la structure cristalline de l'anatase.

12. Photocatalyseur selon la revendication 11, dans lequel la taille des particules est d'environ 20 nm.

13. Photocatalyseur selon la revendication 11 ou 12, dans lequel le rapport atomique Mn:Ti varie entre 0,01:100 et 33:100, de préférence inférieur ou égal à 1:100.

14. Photocatalyseur selon l'une quelconque des revendications 11 à 13 noyé dans une matrice ou immobilisé sur une surface solide ou dans un corps solide.
